Europäisches Patentamt

(19) European Patent Office

Office européen des brevets

(11) EP 0 631 951 B1

## (12) EUROPEAN PATENT SPECIFICATION

(45) Date of publication and mention
of the grant of the patent:
**04.02.1998 Bulletin 1998/06**

(51) Int. Cl.$^6$: **B65G 47/90**, B66C 1/44

(21) Application number: **94201474.7**

(22) Date of filing: **31.05.1994**

(54) **Device for lifting drums and similar objects**

Vorrichtung zum Heben von Fässern oder gleichartigen Gegenständen

Dispositif de levage pour des fûts ou des objets similaires

(84) Designated Contracting States:
**DE FR IT NL**

(30) Priority: **30.06.1993 NL 9301144**

(43) Date of publication of application:
**04.01.1995 Bulletin 1995/01**

(73) Proprietor:
**Speciaal-Machinefabriek J.H. van Uitert B.V.
NL-5107 NC Dongen (NL)**

(72) Inventor:
**Van Dieen, Wilhelmus Antonius Maria
NL-5171 GT Kaatsheuvel (NL)**

(74) Representative:
**Lips, Hendrik Jan George, Ir.
HAAGSCH OCTROOIBUREAU
Breitnerlaan 146
2596 HG Den Haag (NL)**

(56) References cited:
EP-A- 0 142 420          BE-A- 621 280
DE-A- 3 702 708          DE-C- 3 231 780
US-A- 4 254 984

## Description

The invention relates to a device as described in the preamble of claim 1.

Such a device is known by DE-A-3702708. This known device comprises a frame two opposite parts of which are provided with beams which can be brought towards and away from each other. To prevent that drums, being clamped between said beams, will move along said beams, said beams are provided with supports extending substantially transverse to said beams. Owing to this the device is only suitable for lifting drums with a given diameter. Further said drums have to be positioned in such a way that when three or more rows of drums are present between the two beams the drums of an intermediate row will have to be nestled among the drums of the adjacent rows. An even number of more than two rows can not be lifted at all. So the utility of said known device is limited.

Now the object of the invention is to provide a device for lifting drums which is more universally useful.

According to the invention this object is obtained by applying the features indicated in the characterizing portion of the main claim.

By making use of four beams which each are supported by a part of the surrounding frame and which beams are surrounding the drums to be lifted it is possible to clamp a number of drums very firmly.

EP-A-0142420 describes a device for lifting bottles which device comprises a rectangular frame supporting four beams which are movable in respect of said frame. Said frame, however, is positioned at some distance above said beams and in use it is positioned above the bottles to be lifted. The means for moving the beams in respect to said frame being positioned above and across the frame and being very complicated in construction. So in particular in vertical direction the device will comprise much more space than the device according to the present invention.

To take account of deviations in the configuration of a number of drums, it can be provided that at least one of the beams is divided into a number of separate parts.

According to an embodiment of the device according to the invention two opposite beams are spaced in vertical direction in respect of the other pair of beams. The distance has to be only so large that two opposite beams may move over the other pair of beams. This can be useful if only a limited number of drums has to be lifted at once.

According to a further embodiment of the device according to the invention at least one or some of said beams or of said beam parts are guided flexible in respect of said frame, the means for displacing said beams being formed by air bellows, electrical means or such like. So the angle between two adjacent beams need not be exactly square.

When making use of air bellows, the air pressure can be utilized to clamp the drums with the desirable force between the beams so that not a too large force is exerted on the drums. For positioning the beams in their original position after releasing the air pressure in the bellows, one can make use of springs.

When using electrical means, one can for example provide an electromotor with a pinion, which cooperates with a gear rack, which is connected to the beams with an interme diate spring. For controlling the pressing force one can make use of current measurement and cosine $\phi$ by known means.

The invention is further illustrated by means of embodiments, shown in the drawings, in which:

Figure 1 schematically shows a top view of a conveying installation in which a lifting device according to the invention has been incorporated;
Figure 2 schematically shows an end view of the installation according to Figure 1;
Figure 3 schematically shows a top view of a portion of a first embodiment of a lifting device according to the invention in which a number of drums that are to be lifted have been indicated;
Figure 4 schematically shows a top view of a portion of a second embodiment of a lifting device according to the invention in which a number of drums that are to be lifted have been indicated; and
Figures 5 and 6 illustrate other configurations of a number of drums which are to be lifted by means of the device.

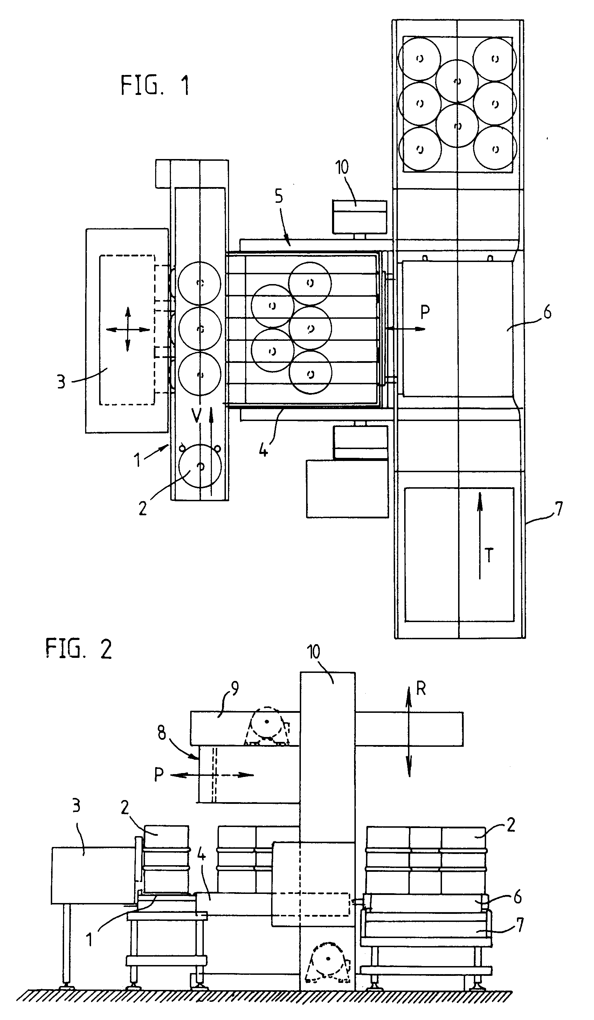

Figures 1 and 2 show an installation comprising a supply or discharge conveyor 1 for drums 2. When the drums are fed by conveyor 1 in the direction of arrow V, then, on reaching a certain position, they will be shoved off conveyor 1 on to coveyor 4 by a pushing device 3. This can be repeated till a desired number of drums have been placed in a desired configuration on conveyor 4. The conveyors 1 and 4 can, for example, be chain conveyors.

After the drums 2 have been positioned in a desired configuration on conveyor 4, a lifting device 5 according to the present invention is used to lift the drums and to transfer them on to pallet 6 which is supplied by means of conveyor 7 according to arrow T.

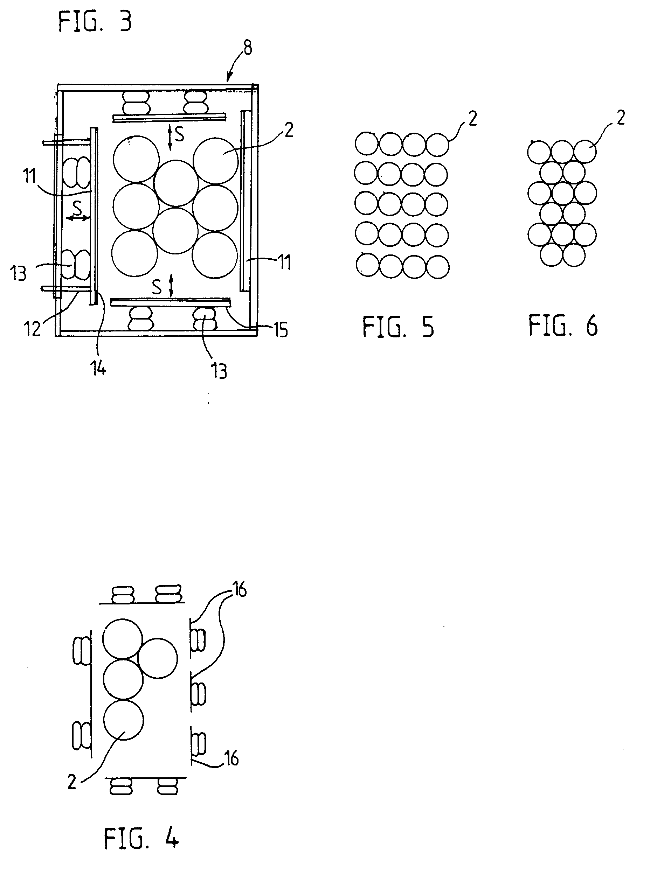

The device 5 comprises a lifting frame 8 as further schematically indicated in Figure 3. The lifting frame 8 is supported by a guide assembly 9 such that the lifting frame 8 is displaceable in a horizontal direction according to arrow P. The guide assembly 9 is moveable along columns 10 in a vertical direction according to arrow R, so that the lifting frame 8 can be moved in both the horizontal and the vertical directions.

After a number of drums 2 have been positioned on the conveyor 4, the lifting frame 8, which has been placed in the proper position in a horizontal direction, is displaced downwards by moving the guide assembly 9 downwards. Then the lifting frame is positioned around drums 2, for example as schematically shown in Figure 3.

The lifting frame 8 supports a beam 11 such that this beam is slideable in the direction of arrow S. To that end the beam 11 can, for example, be provided with pins 12, which are slideable in bushings -not further indicated- in the lifting frame 8. The guiding of beam 11 relative to the lifting frame 8 can be somewhat flexible, so that the beam does not need to be moved exactly parallel to the particular beam of the lifting frame 8. Thus, the position of the beam can, to a certain extent, match the configuration of drums 2. The shifting of beam 11 takes place by means of air bellows 13 which can be pressed apart by supplying pressurized air, so that beam 11 can be pressed against drums 2 with a certain force.

Beam 11, like the beams mentioned in the following, will be lined with a slightly resilient material 14 which is pressed in when contacting drums 2 so that these drums are not subject to a point force or line force.

Drums 2 are pressed against a corresponding beam 11 that, however, is affixedly connected to the lifting frame 8 and which eventually forms an integrated unit with it.

Cross-beams 15 have been positioned in between beams 11. These can be supported by the lifting frame 8 in similar fashion to beam 11, and are moveable relative to the lifting frame by means of air bellows 13.

After the one beam 11 and the cross-beams 15 have been moved towards drums 2 and have clamped them, the lifting frame 8 is moved upwards by means of the guide assembly 9. After that the lifting frame 8 is displaced along the guide assembly 9 till the drums 2 are located above pallet 6, and subsequently the lifting frame 8 is lowered till the drums 2 rest on the pallet. Then the pressure in the air bellows can be released, and the beams 11 and 15 disengage from drums 2 by means of springs not further indicated. The lifting frame 8 eventually is displaced slightly sideways so that also beam 11, which is affixedly connected to the lifting frame, disengages from the drums. Then the lifting frame 8 is moved upwards with the aid of guide assembly 9 so that it can be moved in a horizontal direction once again for lifting a number of following drums 2.

Figure 4 depicts the possibility that beam 11, which is affixedly connected to the lifting frame 8 in the embodiment according to Figure 3, comprises a number of parts 16 which each can be moved separately, so that the drums 2 also can be lifted by means of the lifting device when these have different configurations.

Figures 5 and 6 illustrate two other configurations of the drums 2 which can be lifted by means of the device according to the invention.

As afore-mentioned, a number of drums can also be lifted off a pallet 6 by means of the lifting device 5 according to the present invention in order to be fed to the conveyor 1, which then supplies the drums to a processing installation such as, for example, a filling installation. Thus, the lifting device according to the present invention is operable in two different directions.

It will be apparent that only a few possible embodiments of a device according to the present invention have been illustrated in the drawings and been described in the foregoing, and that numerous modifications can be brought about without departing from the scope of the claims.

## Claims

1. Device for lifting drums (2) and similar objects, comprising a frame (8) which by lifting means (9,10) is movable in vertical direction and comprises at least two oppositly positioned longitudinal parts extending in substantially horizontal direction, means (13) being connected to said parts to support beams (11,15,16) in such a way that by said means at least some of said beams can be moved in respect of said frame (8) and towards and away from each other in a substantially horizontal direction for clamping drums or the like between them, **characterized in that** said frame (8) has a rectangular shape and is formed by four longitudinal mutually connected parts which are lying in substantially the same horizontal plane, each of said parts supporting at least one beam (11,15,16), said beams being positioned inside said frame (8), at least two adjacent beams (11,15,16) being movable substantially in the same horizontal plane as in which said frame (8) is positioned.

2. Device according to claim 1, **characterized in that** two opposite beams (11,16) are spaced in vertical direction in respect of the other pair of beams (15).

3. Device according to claim 1 or 2, **characterized in that** at least one or some of said beams (11, 15) or of beam parts (16) are guided flexible in respect of said frame (8), the means for displacing said beams being formed by air bellows (13), electrical means or such like.

## Patentansprüche

1. Vorrichtung zum Heben von Fässern (2) und ähnlicher Gegenstände mit einem Gestell (8), welches durch Hebeeinrichtungen (9, 10) in vertikaler Richtung bewegbar ist und wenigstens zwei einander gegenüber angeordnete Längsteile umfaßt, die sich im wesentlichen in horizontaler Richtung erstrecken, wobei eine Einrichtung (13) mit diesen Teilen verbunden ist, um Träger (11, 15, 16) derart abzustützen, daß mit dieser Einrichtung wenigstens einige der Träger in Bezug auf das Gestell (8) und zueinander und voneinander weg in einer im wesentlichen horizontalen Richtung bewegt werden können, um Fässer oder dergleichen zwischen sich einzuklemmen, **dadurch gekennzeichnet**, daß das Gestell (8) eine rechteckige Form hat und von vier wechselseitig miteinander verbundenen Längsteilen gebildet wird, die im wesentlichen in der gleichen horizontalen Ebene liegen, wobei jedes dieser Teile wenigstens einen Träger (11, 15, 16) unterstützt, die Träger innerhalb des Gestells (8) angeordnet sind und wenigstens zwei benachbarte Träger (11, 15, 16) im wesentlichen in der gleichen horizontalen Ebene, in welcher das Gestell (8) positioniert ist, bewegbar sind.

2. Vorrichtung nach Anspruch 1, dadurch gekennzeichnet, daß zwei einander gegenüberliegende Träger (11, 16) in vertikaler Richtung in Bezug auf das andere Trägerpaar (15) einen Abstand haben.

3. Vorrichtung nach Anspruch 1 oder 2, dadurch gekennzeichnet, daß wenigstens einer oder einige der Träger (11, 15) oder von Trägerteilen (16) in Bezug auf das Gestell (8) flexibel geführt werden, wobei die Einrichtung zum Verschieben der Träger von Luftbälgen (13), elektrischen Einrichtungen oder dergleichen gebildet wird.

**Revendications**

1. Dispositif de levage pour des fûts (2) et des objets similaires, comprenant un cadre (8) qui peut être déplacé dans la direction verticale par des moyens de levage (9,10) et qui comprend au moins deux parties longitudinales disposées en vis-à-vis s'étendant dans une direction sensiblement horizontale, des moyens (13) étant raccordés auxdites parties pour supporter des poutres (11, 15, 16) de telle manière que, grâce auxdits moyens, au moins certaines desdites poutres peuvent être déplacées par rapport audit cadre (8) et être rapprochées et éloignées l'une de l'autre dans une direction sensiblement horizontale pour serrer entre elles les fûts ou l'analogue, caractérisé en ce que ledit cadre (8) a une forme rectangulaire et est formé par quatre parties longitudinales reliées les unes aux autres, lesquelles parties sont disposées sensiblement dans le même plan horizontal, chacune desdites parties supportant au moins une poutre (11, 15, 16), lesdites poutres étant positionnées à l'intérieur dudit cadre (8), au moins deux poutres adjacentes (11, 15, 16) pouvant se déplacer sensiblement dans le même plan horizontal que celui dans lequel est disposé ledit cadre (8).

2. Dispositif selon la revendication 1, caractérisé en ce que deux poutres opposées (11, 16) sont espacées dans la direction verticale par rapport à l'autre paire de poutres (15).

3. Dispositif selon la revendication 1 ou la revendication 2, caractérisé en ce qu'au moins une ou certaines desdites poutres (11, 15) ou des parties de poutre (16) sont guidées de manière flexible par rapport audit cadre (8), les moyens pour déplacer lesdites poutres étant formés par des soufflets pneumatiques (13), des moyens électriques ou des moyens analogues.

FIG. 1

FIG. 2

FIG. 3

FIG. 5

FIG. 6

FIG. 4